# EUROPÄISCHE PATENTSCHRIFT

(11) **EP 1 244 545 B1**
(45) Veröffentlichungstag und Bekanntmachung des Hinweises auf die Patenterteilung: **09.02.2005**
(21) Anmeldenummer: 00983124.9
(22) Anmeldetag: 10.11.2000
(51) Int. Cl.: B32B 17/10, C09J 4/00

(54) **VERWENDUNG EINES GIESSHARZES UND EINER DAUERPLASTISCHEN RANDABDICHTUNG ZUR HERSTELLUNG EINER SANDWICHANORDNUNG, BESTEHEND AUS EINEM BILDSCHIRM UND EINER GLASTAFEL**
USE OF A CAST RESIN AND A DUROPLASTIC EDGE SEAL FOR PRODUCING A SANDWICH SYSTEM THAT CONSISTS OF A SCREEN AND A GLASS PANE
UTILISATION D'UNE RESINE MOULEE ET D'UN JOINT DE BORDURE DUROPLASTIQUE POUR LA FABRICATION D'UN DISPOSITIF SANDWICH COMPOSE D'UN ECRAN ET D'UN PANNEAU DE VERRE

(30) Priorität: 24.11.1999 DE 19956548; 27.09.2000 DE 10048991
(43) Veröffentlichungstag der Anmeldung: 02.10.2002
(73) Patentinhaber: Kömmerling Chemische Fabrik GmbH, 66954 Pirmasens (DE)
(72) Erfinder: SCHWAMB, Michael, 60325 Frankfurt am Main (DE); PÖHLMANN, Thomas, 63843 Niedernberg (DE)
(74) Vertreter: Vièl, Christof, Dipl.-Ing.
(86) Internationale Anmeldenummer: PCT/EP2000/011104
(87) Internationale Veröffentlichungsnummer: WO 2001/038087

(56) Entgegenhaltungen:
- GB-A- 1 511 933
- US-A- 4 599 274

## Beschreibung

Die Erfindung betrifft die Verwendung eines Gießharzes und die Verwendung einer dauerplastischen Randabdichtungsmasse zum Aufkleben einer Glastafel auf die Frontseite eines Bildschirmes.

Im Laufe der Entwicklung wurde die Bildschirmdiagonale der Bildschirmfront von Kathodenstrahlröhren immer größer. Insbesondere bei großen Bildschirmen besteht die Gefahr, dass bei einer stoßartigen Belastung ein Bildschirmbruch und als Folge eine Implosion eintritt. In einem solchen Fall können Zuschauer durch umherfliegende Splitter verletzt werden. Es ist bekannt, als Splitterschutz eine Kunststofffolie vollflächig auf die Bildschirmfront aufzukleben. Die Bildschirmfront kann dabei flach oder sphärisch gewölbt sein.

Aufgabe der Erfindung ist es, die Bruchempfindlichkeit der Bildschirmfront zu erniedrigen und das Umherfliegen von Glassplittern bei Bruch der Bildschirmfront (flach oder sphärisch) zu vermeiden.

Die Aufgabe wird durch die Verwendung eines transparenten Gießharzes zur Herstellung einer Sandwichanordnung, die aus einem Bildschirm, einer Gießharzschicht und einer Glastafel besteht, gelöst. Das Gießharz besteht aus reaktiven Acrylat- und/oder Methacrylatmonomeren, Acrylat- und/oder Methacrylatoligomeren, Haftvermittlern und Initiatoren. Die reaktiven Acrylat- und/oder Methacrylatmonomere bilden bei der Aushärtung ein Copolymer, welches eine vemetzte Struktur aufweisen kann. Das Gießharz kann weiterhin nichtreaktive Acrylatund/oder Methacrylat-Homo- und Copolymere, Weichmacher, klebrigmachende Zusätze und Stabilisatoren enthalten. Das Gießharz enthält die vorgenannten Inhaltsstoffe in folgenden Gewichts-%-anteilen:

| | | |
|---|---|---|
| a) | reaktive Acrylat- und/oder Methacrylatmonomere | 50 - 97 |
| b) | acrylat- und/oder methacrylatfunktionelle Oligomere | 1 - 40 |
| c) | nichtreaktive Acrylat- und/oder Methacrylat-Homo- und -Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,01 - 3 |
| h) | klebrigmachende Zusätze | 0 - 5 |
| i) | Stabilisatoren | 0 - 2 |

Bevorzugt wird ein Gießharz verwendet, welches die vorgenannten Inhaltsstoffe in folgenden Gewichts-%-anteilen enthält:

| | | |
|---|---|---|
| a) | reaktive Acrylat- und/oder Methacrylatmonomere | 80 - 97 |
| b) | acrylat- und/oder methacrylatfunktionelle Oligomere | 1 - 20 |
| c) | nichtreaktive Acrylat- und/oder Methacrylat-Homo- und - Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,05 - 1 |
| h) | klebrigmachende Zusätze | 0 - 5 |
| i) | Stabilisatoren | 0 - 2 |

Als reaktive Acrylat- und/oder Methacrylatmonomere (Vernetzer) werden monofunktionelle und multifunktionelle, bevorzugt monofunktionelle, Ester der Acryl- bzw. Methacrylsäure eingesetzt. Die verwendeten Alkoholkomponenten der Ester können eine mit funktionellen Gruppen substituierte oder unsubstituierte Alkylgruppe (wie z.B. Methyl, Ethyl, n-Propyl, iso-Propyl, n-Butyl, tert-Butyl, Pentyl, Hexyl, deren Isomere und höheren Homologe, wie 2-Ethylhexyl, Phenoxyethyl, Hydroxyethyl, 2-Hydroxypropyl, und Caprolactonhydroxyethyl, Polyethylenglycol, Polypropylengycol und Dimethylaminoethyl) umfassen. Als reaktive Monomere können auch die Acryl- und Methacrylsäure selbst, die Amide dieser Säuren (wie z.B. Dimethylacrylamid oder Diethylacrylamid sowie Methylethylacrylamid und Acrylnitril eingesetzt) werden. Es können auch Mischungen der reaktiven Acrylat- und Methacrylatmonomere verwendet werden. Beispiele für reaktive Acrylat- und Methacrylatmonomere mit einer Doppelbindung sind Methylacrylat, Methylmethacrylat, Ethylacrylat, Ethylmethacrylat, n-Propylacrylat, n-Propylmethacrylat, i-Propylacrylat, i-Propylmethacrylat, n-Butylacrylat, n-Butylmethacrylat, i-Butylacrylat, i-Butylmethacrylat, i-Octylacrylat, i- Octylmethacrylat, n-Octylacrylat, n-Octylmethacrylat, 2-Ethylhexylacrylat, 2-Ethyl-hexylmethacrylat, n-Decyl-acrylat, n-Decylmethacrylat, i-Decylacrylat, Laurylacrylat, Laurylmethacrylat, Stearylacrylat, Stearylmethacrylat, Tridecylmethacrylat, Phenoxy-ethylacrylat, Nonylphenolethoxyacrylat, β-Carboxyethylacrylat, i-Bornylacrylat, i-Bornylmethacrylat, Tetrahydrofurfurylacrylat, Tetrahydrofurfurylmethacrylat, Cyclohexylacrylat, Cyclohexylmethacrylat, Dicyclopentenylacrylat, Dicyclopentenyloxyethylacrylat, Propylenglycolmonoacrylat, Propylenglycolmonomethacrylat, 2-(2-Ethoxyethoxy)ethylacrylat, N-Vinylpyrrolidon, 2,3-Di-hydroxypropylmethacrylat, 2-Hydroxyethylacrylat, 2-Hydroxyethylmethacrylat, 2-Hydroxypropylacrylat oder 2-Hydroxypropylmethacrylat. Beispiele für reaktive Acrylat- und Methacrylatmonomere mit 2 Doppelbindungen sind Butandioldiacrylat, Butan-dioldimethacrylat, 1,3-Butylenglycoldimethacrylat, 1,6-Hexandioldiacrylat, 1,6-Hexandioldimethacrylat, Neopentylglycoldiacrylat, Ethylenglycoldimethacrylat, Diethylenglycoldiacrylat, Diethylenglycoldimethacrylat, Triethylenglycoldiacrylat, Triethylenglycoldimethacrylat, Tetraethylenglycoldiacrylat, Tetraethylenglycoldimethacrylat, Polyethylenglycoldiacrylat mit einem mittleren Molgewicht von 200, 400 oder 600 g/Mol, Polyethylenglycoldimethacrylat mit einem mittleren Molgewicht von 200, 400 oder 600 g/Mol, Dipropylenglycoldiacrylat oder Tripropylenglycoldiacrylat. Beispiele für reaktive Acrylat- und Methacrylatmonomere mit drei Doppelbindungen sind Trimethylolpropantriacrylat, Tri-methylolpropantrimethacrylat, Pentaerythritoltriacrylat, ethoxyliertes oder propoxyliertes Trimethylolpropantriacrylat sowie das entsprechende Methacrylat mit einem mittleren Molekulargewicht von 430 bis 1000 oder Tris(2-hydroxyethyl)isocyanurattriacrylat. Beispiele für reaktive Acrylat- und Methacrylatmonomere mit mehreren Doppelbindungen sind Pentaerythritoltetraacrylat, Di-pentaerythritolpentaacrylat oder Di(trimethylolpro-pan)tetraacrylat.

Beispiele für acrylat- und methacrylatfunktionelle Oligomere sind Epoxyacrylate, Urethanacrylate, Polyesteracrylate und Siliconacrylate. Die Oligomere können monooder höher-funktionell sein, vorzugsweise werden sie difunktionell eingesetzt. Es können auch Mischungen der Oligomere verwendet werden.

Epoxyacrylate basieren auf jeweils mit Acryl- oder Methacrylsäure terminiertem Bisphenol-A-diglycidylether, Bisphenol-F-diglycidylether, deren Oligomeren oder Novolakglycidylether.

Urethanacrylate sind aufgebaut aus Isocyanaten (z.B. Toluylen-, Tetramethylxylylen-, Hexamethylen-, Isophoron-, Cyclohexylmethan-, Trimethylhexa-methylen-, Xylylenoder Diphenylmethan-diisocyanate) und Polyolen und funktionalisiert mit Hydroxyacrylaten (z.B. 2-Hydroxyethylacrylat) oder Hydroxymethacrylaten (z.B. Hydroxyethylmethacrylat).

Die Polyole können sein Polyesterpolyole oder Polyetherpolyole. Polyesterpolyole können hergestellt werden aus einer Dicarbonsäure oder einer Mischung mehrerer Dicarbonsäuren, bevorzugt aus einer Dicarbonsäure (z.B. Adipinsäure, Phthalsäure oder deren Anhydride) und einem oder mehreren Diolen bzw. Polyolen, bevorzugt aus einer Mischung von einem Diol mit einem Triol, (z.B. 1,6-Hexandiol, 1,2-Propandiol, Neopentylglycol, 1,2,3-Propantriol, Trimethylolpropan, Pentaerythrit oder Ethylenglycole, wie Diethylenglycol). Polyesterpolyole können auch durch Reaktion einer Hydroxycarbonsäure (z.B. ausgehend von Caprolacton) mit sich selbst gewonnen werden. Polyetherpolyole können durch Veretherung eines Diols oder Polyoles mit Ethylenoxid oder Propylenoxid hergestellt werden.

Polyesteracrylate sind die oben beschriebenen Polyesterpolyole, die mit Acrylsäure oder mit Methacrylsäure funktionalisiert sind.

Die hier verwendeten, an sich bekannten, Siliconacrylate basieren auf mit Acrylat funktionalisierten Polydimethylsiloxanen unterschiedlichen Molekulargewichts.

Nichtreaktive Acrylat- oder Methacrylat-Homo- und Copolymere sind Homo- und Copolymere der Acrylsäure, der Methacrylsäure und der zuvor beschriebenen Ester dieser Säuren. Das Gießharz kann auch Mischungen der genannten Homo- und Copolymere enthalten. Das Gießharz kann auch ohne nichtreaktive Acrylat- und Methacrylat-Homo- und Copolymere hergestellt werden.

Füllstoffe können verstärkend und nichtverstärkend sein. Als Füllstoffe können pyrogene oder gefällte Kieselsäuren, die vorzugsweise hydrophil und/oder oberflächenbehandelt sind, und Cellulosederivate, wie Cellulose-acetate, - acetobutyrate, - acetopropionate, Methylcellulose und Hydroxypropyl-methylcellulose, eingesetzt werden. Das Gießharz kann auch Mischungen der genannten Füllstoffe enthalten. Das Gießharz kann auch ohne Füllstoffe hergestellt werden.

Beispiele für Weichmacher sind Ester der Phthalsäure, wie Di-2-ethylhexyl-, Diisodecyl-, Diisobutyl-, Dicyclohexyl-, und Dimethyl-phthalat, Ester der Phosphorsäure, wie 2-Ethylhexyl-diphenyl-, Tri(2-ethylhexyl)- und Tricresyl-phosphat, Ester der Trimellitsäure, wie Tri(2-ethylhexyl)- und Triisononyl-trimellitat, Ester der Citronensäure, wie Acetyltributyl- und Acetyltriethyl-citrat, und Ester der Dicarbonsäuren, wie Di-2-ethylhexyladipat und Dibutylsebacat. Das Gießharz kann auch Mischungen der genannten Weichmacher enthalten. Das Gießharz kann auch ohne Weichmacher hergestellt werden.

Haftvermittler können ausgewählt werden aus der Gruppe der organofunktionellen Silane, wie 3-Glycidyloxypropyl-trialkoxysilan, 3-Aminopropyl-trialkoxysilan, N-Aminoethyl-3-aminopropyl-trialkoxysilan, 3-Methacryloxypropyl-trialkoxysilan, Vinyltrialkoxysilan, iso-Butyltrialkoxysilan, Mercaptopropyl-trialkoxysilan, und aus der Gruppe der Kieselsäureester, wie Tetraalkylorthosilikat. Das Gießharz kann auch Mischungen der genannten Haftvermittler enthalten.

Als Fotoinitiatoren können Verbindungen jeweils aus der Gruppe der Benzoinether, der Benzilketale, der α-Dialkoxyacetophenone, der α-Hydroxyalkylphenone, der α-Aminoalkylphenone, der Acylphosphinoxide, der Benzophenone oder der Thioxanthone oder Mischungen davon eingesetzt werden. Beispiele sind 2-Hydroxy-2-methyl-1-phenylpropanon-1, Bis(2,6-dimethoxybenzoyl)-2,4,4-trimethyl-phosphinoxid, 1-Hydroxy-cyclohexylphenylketon, 2-Benzyl-2-dimethyl-amino-1-(4-morpholinophenyl)-butanon-1, 1-Hydroxy-cyclohexylphenyl-keton, Benzophenon, 2,2-Dimethoxy-1,2-diphenylethan-1-on, und 2-Methyl-1-[4-(methylthio)phe-nyl]-2-morpholonopropanon-1.

Klebrigmachende Zusätze können ausgewählt werden aus der Gruppe der natürlichen und synthetischen, auch nachträglich modifizierten, Harze. Als Harze dienen Kohlenwasserstoffharze, Kolophonium und dessen Derivate, Polyterpene und deren Derivate, Cumaron-Indenharze, Phenolharze, Polybutene, hydrierte Polybutene, Polyisobutene und hydrierte Polyisobutene. Das Gießharz kann auch Mischungen der genannten klebrigmachenden Zusätze enthalten. Das Gießharz kann auch ohne klebrigmachende Zusätze hergestellt werden.

Stabilisatoren können Antioxidantien, wie Phenole (z.B. 4-Methoxyphenol) oder sterisch gehinderte Phenole (z.B. 2,6-Di-tert.-butyl-4-methylphenol) oder Mischungen verschiedener Antioxidantien sein. Das Gießharz kann auch ohne Stabilisatoren hergestellt werden.

Verwendung findet vorzugsweise ein niedrigviskos eingestelltes Gießharz, da dies für die Verarbeitung, d.h., den rationellen Gießprozess besonders geeignet ist. Die Viskosität, bei 23°C gemessen, liegt im Bereich von 1 bis 1000 mPa*s, bevorzugt im Bereich von 1 bis 500 mPa*s und besonders bevorzugt im Bereich von 1 bis 100 mPa*s (gemessen an einem Rotationsviskosimeter Rheolab MC20 der Firma Physica mit einem Kegel MK20/157 (25 mm Durchmesser, 1°) bei einem Geschwindigkeitsgefälle von D = 40 1/s). Die Aushärtung des Gießharzes wird mit UV-Licht durchgeführt. Dabei wird das Gießharz in eine möglichst transparente und farblose Polymerfolie überführt.

Bevorzugt wird ein Gießharz verwendet, dessen Transparenz im ausgehärteten Zustand (gemessen mit einem Messgerät der Firma Byk Typ Hazegard XL-211 an Proben mit einem Aufbau von 4 mm Floatglas / 2 mm Gießharz / 4 mm Floatglas) in einem Bereich von 0,01 bis 2 Haze, bevorzugt in einem Bereich von 0,01 bis 1 Haze und besonders bevorzugt in einem Bereich von 0,01 bis 0,5 Haze liegt.

Bevorzugt wird ein Gießharz verwendet, dessen Farbe im ausgehärteten Zustand (gemessen mit einem Spektralfotometer der Firma Perkin Eimer Typ Lambda 12 an Proben mit einem Aufbau von 4 mm Floatglas / 2 mm Gießharz / 4 mm Floatglas) in einem Bereich von L* 50 bis 99, a* -10 bis 10, b* -10 bis 10, bevorzugt in einem Bereich von L* 80 bis 99, a* -5 bis 5, b* -5 bis 5 und besonders bevorzugt in einem Bereich von L* 90 bis 99, a* -5 bis 0, b* -1 bis 2 liegt. Diese Daten beziehen sich auf eine Messung mit Normlicht D 65 und einem 2° Normalbeobachter.

Das verwendete Gießharz wird durch Mischen der Inhaltsstoffe in einem geeigneten Aggregat hergestellt. Falls beim Mischen hohe Scherkräfte zur Zerstörung von Füllstoffagglomeraten notwendig sind, kann das Aggregat ein Planetendissolver mit schnelldrehender Dissolverscheibe sein. Falls beim Mischen keine hohen Scherkräfte benötigt werden, kann das Aggregat ein Rührbehälter mit einem Flügelmischer oder Turbulenzmischer sein. Ob hohe oder niedrige Scherkräfte benötigt werden, hängt von den verwendeten Inhaltsstoffen ab. So ist z.B. zum Einarbeiten von pyrogener Kieselsäure in eine Flüssigkeit eine Dissolverscheibe unbedingt notwendig. Bei niedrigen Viskositäten kann die Anwendung einer Perlmühle notwendig werden.

Durch Beigabe von Füllstoffen steigt die Viskosität deutlich an. Beim Mischvorgang kann die Verwendung von Vakuum oder Schutzgas notwendig sein.

Die Mischtemperatur liegt bei Mischungsbeginn bei Raumtemperatur und kann in Abhängigkeit von der Konsistenz der Mischung und vom Energieeintrag des verwendeten Mischaggregates bis auf 70°C ansteigen. Bei Verwendung von niedrigsiedenden Monomeren, wie z.B. Methylmethacrylat, kann eine Kühlung notwendig werden.

Bei der erfindungsgemäßen Verwendung des Gießharzes wird eine Sandwichanordnung, bestehend aus einem Bildschirm, einer Gießharzschicht und einer Glasscheibe, hergestellt. Die Herstellung der Sandwichanordnung kann in folgende, einzelne Verfahrensschritte eingeteilt werden:
1. Reinigen und Trocknen des Bildschirmes und der Glastafel
2. Aufbringen einer Randabdichtung (entweder auf die Bildschirmfront oder auf die Glastafel, bevorzugt auf die Bildschirmfront)
3. Deckungsgleiches Auflegen der Glastafel auf die Bildschirmfront
4. Verpressen des erhaltenen Verbundes aus Bildschirm und Glastafel auf die gewünschte Distanz von Bildschirm und Glastafel
5. Einfüllen des Gießharzes
6. Entlüftung des Zwischenraumes und Verschließen der Einfüllöffnung
7. Kontrolle des mit Gießharz befüllten Zwischenraumes auf Luftblasenfreiheit
8. Aushärtung des Gießharzes durch Bestrahlung mit UV-Licht
9. Endkontrolle der fertigen Sandwichanordnung

Die einzelnen Arbeitsschritte können wie folgt ausgeführt werden:

Das Reinigen und Trocknen der Bildschirmfront und der Glastafel erfolgt in an sich bekannter Weise mit Hilfe handelsüblicher Glasreiniger. Vorzugsweise kann dies automatisch in einer Waschmaschine geschehen. Nach dem Waschen müssen die Glastafeln absolut trocken, fettfrei und frei von Reinigerrückständen sein. Von Vorteil ist eine Kontrolle auf Sauberkeit. Dies kann bei der Glastafel im Durchlicht und an der Bildschirmfront in Reflexion mit Hilfe von Leuchtstoffröhren visuell erfolgen. Beim vorhergehenden Zuschneiden der Glastafel wird vorteilhafterweise mit wasserlöslichen oder mit rückstandsfrei abtrocknenden Schneidölen gearbeitet.

Die Randabdichtung kann mittels eines doppelseitigen Klebebandes oder bevorzugt mittels eines dauerplastischen Materials (Randabdichtungsmasse), welches thermoplastische Eigenschaften besitzt und nach dem Aufschmelzen als Raupe oder Strang auf die Bildschirmfront oder die Glastafel aufgebracht wird, vorgenommen werden.

Die verwendete Randabdichtung muss zum verwendeten Gießharz kompatibel sein, d.h. zwischen Randabdichtung und Gießharz dürfen sich keine chemischen Reaktionen abspielen und es muss eine mechanische Verträglichkeit gegeben sein. Dazu muss die Haftkraft pro Fläche des Gießharzes bei Aushärtung größer sein als die Fließgrenze der Randabdichtung bei Raumtemperatur. Dies gewährleistet, dass es nicht zu unerwünschten Ablösungen kommt.

Als Klebeband können z.B. doppelseitig mit Haftklebstoff beschichtete Acrylatschaumbänder wie z.B. Acrylic Foam Tape Typ 4951, 4611 oder 4945/4664 der Firma 3M oder doppelseitig mit Haftklebstoff beschichtete Polyurethanschaumbänder von z.B. der Firma Nordson oder transparente eigenklebrige Acrylatbänder wie z.B. Acrylic Tape Typ 4910 oder 4915 der Firma 3M verwendet werden. Die Klebebänder sind zwischen 3 bis 9 mm, bevorzugt 6 mm, breit und 1 bis 2 mm, bevorzugt 1,2 bis 1,5 mm dick. Aufgrund der Weichheit bieten die transparenten Acrylatbänder relativ zu den Schaumbändern Vorteile bzgl. der Kompressibilität. Dies kommt daher, dass die zur Verwendung vorgesehenen Gießharze bei der Aushärtung einen Volumenschwund zwischen 5 und 17 % aufweisen. Durch diesen Schwund bilden sich in der Gießharzschicht während der Aushärtung Spannungen aus. Diese Spannungen sind um so größer, je größer der Volumenschwund des Gießharzes, je ungleichmäßiger die Glasdicken über die Fläche sind, je dicker die Glastafel ist und vor allem je härter und elastischer die Randabdichtung ist.

Das deckungsgleiche Auflegen der Glastafel auf die Bildschirmfront, Verpressen des erhaltenen Verbundes aus Bildschirm und Glastafel auf die gewünschte Distanz, das Einfüllen des Gießharzes, das Entlüften des Zwischenraumes und das Verschließen der Einfüllöffnung erfolgt in üblicher Art und Weise.

Bevorzugt erfolgt die Befüllung mittels Flachdüsen aus dünnem Edelstahlblech mit einer Dicke kleiner 0,2 mm und einer Breite von maximal 50 mm, bevorzugt max. 20 mm. Diese Befüllung erfolgt von oben in leichter Schräglage der Sandwichanordnung oder von unten, indem eine kleine Aluminiumdüse (bestehend aus max. 0,2 mm dickem Aluminiumblech) eingeklebt wird. Diese Düse ist ca. 5 mm breit und 1 mm dick und besitzt an der Stelle, an der sie in die Sandwichanordnung eingeklebt ist, eine rechteckige bis ovale Form. Bevorzugt wird jedoch die Befüllung von oben vorgenommen.

Bevorzugt wird die Sandwichanordnung nach Befüllung in der Form entlüftet, dass die Sandwichanordnung aus der Schräglage langsam in die horizontale Lage gebracht wird. Nach dem Entlüften wird die Einfüllöffnung verschlossen. Dies kann mit der thermoplastischen Randabdichtungsmasse selbst oder mit einem Schmelzklebstoff auf z.B. Ethylenvinylacetatcopolymer-Basis durchgeführt werden.

Die noch nicht ausgehärtete Sandwichanordnung wird auf evtl. noch vorhandene Luftblasen kontrolliert. Diese können z.B. mit einer Kanüle entfernt werden.

Die Aushärtung des Gießharzes erfolgt mit UV-Licht. Hierzu haben sich bei den hier verwendeten Fotoinitiatoren Niederdruckröhren in Blacklight blue als sehr geeignet erwiesen. Diese Röhren besitzen eine niedrige Stromaufnahme. Mehrere Röhren werden so angeordnet, dass sich ein homogen ausgeleuchtetes Strahlungsfeld ergibt. Bei einer Strahlungsleistung (integraler Wert 200 bis 400 nm) von 15 bis 25 W/m², gemessen mit einem Meßgerät der Firma Heraeus Typ Radialux, liegt die benötigte Bestrahlungszeit bis zur vollständigen Aushärtung im Bereich von 3 bis 20 Minuten. Der genaue Wert hängt dabei von der verwendeten Gießharzmischung ab.

Aufgrund der relativ zu Floatglas abweichenden schlechten Planität von Bildschirmen können bei der Herstellung von Bildschirmsandwichanordnungen mit einem Klebeband als Randabdichtung ungewünschte Spannungen auftreten.

Modellhaft betrachtet, kann man sich die Randabdichtung als Feder und/oder Dämpfer vorstellen. Im Falle einer Feder wird diese durch den Polymerisationsschrumpf des Gießharzes während der Aushärtung zusammengedrückt. Die Feder steht permanent unter Druck und die angrenzende polymere Gießharzzwischenschicht permanent unter Zug. Das heißt, dass die polymere Gießharzzwischenschicht während der gesamten Lebensdauer der Sandwichanordnung eine statische Belastung, verursacht durch die Feder und den Polymerisationsschrumpf, aufzunehmen hat. Doppelseitig klebenden Klebebänder stellen eine Kombination aus Feder und Dämpfer dar. Das heißt, dass bei einer durch den Polymerisationsschrumpf dauerhaft angelegten Zugkraft auf Bildschirm und Glastafel sich ein Teil dieser Kraft als Verformung der Randabdichtung auswirkt. Im Modell sind dafür die dämpfenden Eigenschaften der Randabdichtung verantwortlich.

Dennoch bleibt aufgrund der federnden Eigenschaften der Klebebänder eine Restdruckkraft erhalten. Für die dämpfenden Eigenschaften ist der viskose Anteil der Randabdichtung und für die federnden Eigenschaften der elastischem Anteil verantwortlich. Das heißt, dass das Elastomer, aus dem das Klebeband aufgebaut ist, viskoelastische Eigenschaften hat.

Wünschenswert ist eine Randabdichtung, die so wenig wie möglich als Feder und so viel wie möglich als Dämpfer wirkt, um die Polymerisationsschrumpfkräfte weitestgehend abbauen zu können.

Gelöst wird diese Aufgabe durch die Verwendung einer Randabdichtung, die aus einer bei Raumtemperatur dauerplastischen Masse besteht, welche thermoplastische Eigenschaften besitzt und die nach dem Aufschmelzen als Raupe oder Strang auf die Bildschirmfront oder die Glastafel aufgebracht wird.

Bevorzugt besteht die verwendete Randabdichtungsmasse aus einem Basispolymer und gegebenenfalls weiteren Inhaltsstoffen.

Das Basispolymer kann aus einem Homo-, Co- oder Terpolymeren des Isobutylens oder einer Mischung davon bestehen oder aus einem Homo- und/oder Copolymeren von Acrylaten und/oder Methacrylaten oder Mischungen davon bestehen.

Weitere Inhaltsstoffe können sein thermoplastische Polymere, natürliche und synthetische Kautschuke, klebrigmachende Zusätze, Weichmacher, Haftvermittler, verstärkende und nichtverstärkende Füllstoffe, Stabilisatoren und andere Zusätze.

Eine bevorzugt verwendete Randabdichtungsmasse enthält das Basispolymer und die weiteren Inhaltsstoffe in folgenden Gewichts-%-anteilen:

| | | |
|---|---|---|
| a) | Basispolymer | 30 - 100 |
| b) | thermoplastische Polymere | 0 - 50 |
| c) | natürliche und synthetische Kautschuke | 0 - 50 |
| d) | klebrigmachende Zusätze | 0 - 30 |
| e) | Weichmacher | 0 - 50 |
| f) | Haftvermittler | 0 - 5 |
| g) | Stabilisatoren | 0 - 5 |
| h) | verstärkende und nichtverstärkende Füllstoffe | 0 - 70 |

Besonders bevorzugt enthält die verwendete Randabdichtungsmasse das Basispolymer und die weiteren Inhaltsstoffe in folgenden Gewichts-%-anteilen:

| | | |
|---|---|---|
| a) | Basispolymer | 40 - 100 |
| b) | thermoplastische Polymere | 0 - 30 |
| c) | natürliche und synthetische Kautschuke | 0 - 30 |
| d) | klebrigmachende Zusätze | 0 - 25 |
| e) | Weichmacher | 0 - 30 |
| f) | Haftvermittler | 0 - 3 |
| g) | Stabilisatoren | 0 - 3 |
| h) | verstärkende und nichtverstärkende Füllstoffe | 0 - 60 |

Homopolymere des Isobutylens sind Polyisobutylene, die kommerziell in verschiedenen Molekulargewichtsbereichen erhältlich sind. Beispiele für Polyisobutylen-Handelsnamen sind Oppanol (BASF AG), Vistanex (Exxon) oder Efrolen (Efremov). Der Zustand der Polyisobutylene reicht von flüssig über weichharzartig bis kautschukartig. Die Molekulargewichtsbereiche können wie folgt angegeben werden: Der Zahlenmittelwert der Molmasse beträgt 2.000 bis 1.000.000 g/mol, bevorzugt 24.000 bis 600.000 g/mol, und der Viskositätsmittelwert der Molmasse beträgt 5.000 bis 6.000.000 g/mol, bevorzugt 40.000 bis 4.000.000 g/mol.

Co- und Terpolymere des Isobutylens beinhalten als Co- und Termonomere 1,3-Diene, wie Isopren, Butadien, Chloropren oder β-Pinen, funktionelle Vinylverbindungen, wie Styrol, α-Methylstyrol, p-Methylstyrol oder Divinylbenzol, oder weitere Monomere. Ein Beispiel für ein Copolymer aus Isobutylen und Isopren ist Butylkautschuk mit geringen Anteilen an Isopren; kommerziell erhältlich sind z.B. diverse Butyl-Typen der Firmen Bayer AG, Exxon Chemical oder Kautschuk-Gesellschaft. Terpolymere des Isobutylens mit den Monomeren Isopren und Divinylbenzol ergeben teilvernetzte Butylkautschuk-Typen, die auch durch nachträgliche Vemetzung von Butylkautschuk erhältlich sind; kommerziell erhältlich sind z.B. LC Butyl von Exxon Chemical, Kalar von Hardman oder Polysar Butyl XL von Bayer AG. Die Homo-, Co- und Terpolymeren von Isobutylen können auch einer nachträglichen chemischen Modifizierung unterworfen werden; bekannt ist die Umsetzung von Butylkautschuk mit Halogenen (Chlor, Brom), die zu Chlor- bzw. Brombutylkautschuk führt. Ähnlich erfolgt die Umsetzung eines Copolymeren aus Isobutylen und p-Methylstyrol mit Brom zu dem Terpolymer aus Isobutylen, p-Methylstyrol und p-Bromomethylstyrol, das kommerziell erhältlich ist unter dem Handelsnamen EXXPRO von Exxon Chemical.

Homo- oder Copolymere von Acrylaten oder Methacrylaten (Poly(meth)acrylate) sind Polymere der Ester von Acryl- bzw. Methacrylsäure und können beispielsweise als Alkoholkomponente eine mit funktionellen Gruppen substituierte oder unsubstituierte Alkylgruppe, z.B. Methyl, Ethyl, Propyl, iso-Propyl, n-Butyl, iso-Butyl, tert-Butyl, Pentyl und Hexyl und deren Isomeren und höheren Homologen, 2-Ethylhexyl, Phenoxyethyl, Hydroxyethyl, 2-Hydroxypropyl, Caprolactonhydroxy-ethyl, Dimethylaminoethyl, umfassen. Eingeschlossen sind auch Polymere der Acrylsäure, der Methacrylsäure, von Amiden der genannten Säuren und von Acrylnitril. Es können auch teilvernetzte Poly(meth)acrylate, bei denen die Vernetzung über ein mehrfunktionelles Monomer mit z.B. Diethylenglycol oder Trimethylolpropan als Alkoholkomponente erfolgt, und Mischungen der Polyacrylate und der Polymethacrylate verwendet werden.

Beispiele für thermoplastische Polymere sind Polyolefine als Homo- und Copolymere, aufgebaut aus den Monomeren Ethylen, Propylen, n-Buten und deren höheren Homologen und Isomeren und aus funktionellen Vinylverbindungen wie Vinylacetat, Vinylchlorid, Styrol und α-Methylstyrol. Weitere Beispiele sind Polyamide, Polyimide, Polyacetale, Polycarbonate, Polyester und Polyurethane und Mischungen der erwähnten Polymere. Die erfindungsgemäß zu verwendende Randabdichtungsmasse kann jedoch auch ohne thermoplastische Polymere hergestellt werden.

Natürliche und synthetische Kautschuke können ausgewählt werden aus der Gruppe der Homopolymeren von Dienen, der Gruppe der Co- und Terpolymeren von Dienen mit Olefinen und der Gruppe der Copolymeren von Olefinen. Beispiele sind Polybutadien, Polyisopren, Polychloropren, Styrol-Butadien-Kautschuk, Blockcopolymere mit Blöcken aus Styrol und Butadien oder Isopren, Ethylen-Vinylacetat-Kautschuk, Ethylen-Propylen-Kautschuk und Ethylen-Propylen-Dien-Kautschuk, beispielsweise mit Dicyclopentadien oder Ethylidennorbornen als DienKomponente. Die Kautschuke können auch in hydrierter Form und auch in Mischungen eingesetzt werden. Die erfindungsgemäß zu verwendende Randabdichtungsmasse kann jedoch auch ohne Kautschuke hergestellt werden.

Klebrigmachende Zusätze können ausgewählt werden aus der Gruppe der natürlichen und synthetischen, auch nachträglich modifizierten Harze, die unter anderem Kohlenwasserstoffharze, Kolophonium und dessen Derivate, Polyterpene und deren Derivate, Cumaron-Indenharze und Phenolharze umfassen, und aus der Gruppe der Polybutene, der Polyisobutene und der abgebauten flüssigen Kautschuke (z.B. Butylkautschuk oder EPDM), die auch hydriert sein können. Es können auch Mischungen der aufgeführten klebrigmachenden Zusätze eingesetzt werden. Die erfindungsgemäß zu verwendende Randabdichtungsmasse kann jedoch auch ohne klebrigmachende Zusätze hergestellt werden.

Beispiele für Weichmacher sind Ester der Phthalsäure (z.B. Di-2-ethylhexyl-, Diisodecyl-, Diisobutyl- oder Dicyclohexyl-phthalat), der Phosphorsäure (z.B. 2-Ethylhexyl-diphenyl-, Tri-(2-ethylhexyl)- oder Tricresyl-phosphat), der Trimellitsäure (z.B. Tri(2-ethylhexyl)- oder Triisononyl-trimellitat), der Citronensäure (z.B. Acetyltributyl- oder Acetyltriethyl-citrat) oder von Dicarbonsäuren (z.B. Di-2-ethylhexyl-adipat oder Dibutylsebacat). Es können auch Mischungen der Weichmacher eingesetzt werden. Die erfindungsgemäß zu verwendende Randabdichtungsmasse kann jedoch auch ohne Weichmacher hergestellt werden.

Haftvermittelnde Substanzen können ausgewählt werden aus der Gruppe der Silane, die beispielsweise 3-Glycidyloxypropyl-trialkoxysilan, 3-Aminopropyl-trialkoxysilan, N-Aminoethyl-3-aminopropyl-trialkoxysilan, 3-Methacryloxypropyl-trialkoxysilan, Vinyltrialkoxysilan, iso-Butyl-trialkoxysilan, 3-Mercaptopropyl-trialkoxysilan umfassen können, aus der Gruppe der Kieselsäureester, z.B. Tetra-alkylorthosilikate, und aus der Gruppe der Metallate, z.B. Tetraalkyltitanate oder Tetraalkylzirkonate, sowie Mischungen der aufgeführten haftvermittelnden Substanzen. Die erfindungsgemäß zu verwendende Randabdichtungsmasse kann jedoch auch ohne haftvermittelnde Substanzen hergestellt werden.

Stabilisatoren können Antioxidantien vom Typ der sterisch gehinderten Phenole (z.B. Tetrakis[methylen-3-(3,5-di-tert-butyl-4-hydroxyphenyl)- propionatjmethan) oder vom Typ der schwefelbasierenden Antioxidantien wie Mercaptane, Sulfide, Polysulfide, Thioharnstoff, Mercaptale, Thioaldehyde, Thioketone usw. sein, oder UV-Schutzmittel vom Typ der Benzotriazole, Benzophenone oder vom HALS-Typ (Hindered Amine Light Stabilizer) oder Ozonschutzmittel sein. Diese können entweder alleine oder in Mischungen eingesetzt werden. Die erfindungsgemäß zu verwendende Randabdichtungsmasse kann jedoch auch ohne Stabilisatoren hergestellt werden.

Beispiele für verstärkende und nichtverstärkende Füllstoffe sind pyrogene oder gefällte Kieselsäure, Kieselgel, gefällte oder gemahlene Kreide (auch oberflächenbehandelt), Calciumoxid, Ton, Kaolin, Talkum, Quarz, Zeolithe, Titandioxid, Glasfasern oder Aluminium- und Zinkpulver und Mischungen davon. Wenn eine dunkle Farbe der erfindungsgemäßen Randabdichtung nicht als störend empfunden wird, können auch Ruß, Kohlenstofffasern oder Graphit eingesetzt werden. Die erfindungsgemäß zu verwendende Randabdichtungsmasse kann jedoch auch ohne Füllstoffe hergestellt werden.

Eine bevorzugte Randabdichtung hat eine Fließgrenze von maximal 4000 Pa, besonders bevorzugt maximal 2000 Pa, bei 120 °C (gemessen mit einem Rheometer mit Platte/Platte-Geometrie, Messplatte 25 cm Durchmesser, Messung in Oszillation bei Oszillationsfrequenz 1 Hz, Drehmomentbereich von 0,1 bis 100 mNm, Schergeschwindigkeit von 10⁻⁴ bis 1 s⁻¹).

Die erfindungsgemäß zu verwendende Randabdichtungmasse wird hergestellt durch Mischen des Basispolymeren in einem geeigneten Aggregat. Es können weitere, oben beschriebenen Inhaltsstoffen dazugemischt werden. Das Mischaggregat kann, wenn hohe Scherkräfte erforderlich sind, beispielsweise ein Kneter, ein Doppelschnecken- oder ein Einschneckenextruder sein. Falls keine großen Scherkräfte benötigt werden, kann die Mischung in einem Planetendissolver, einem Flügelmischer mit Dissolverscheibe, einem Turbulenzmischer oder ähnlichen Aggregaten erfolgen. Ob hohe oder niedrige Scherkräfte benötigt werden, hängt von der Konsistenz der Ausgangsstoffe und des jeweiligen Produktes ab; so benötigt man zum Einarbeiten von Kautschuken oder verstärkenden Füllstoffen hohe Scherkräfte.

Die Mischtemperatur liegt im Bereich von 40°C bis 200°C, bevorzugt im Bereich zwischen 70°C und 180°C. Optional kann die Mischung auch unter Schutzgas oder Vakuum durchgeführt werden.

Die thermoplastische Randabdichtungsmasse wird nach dem Aufschmelzen mittels bekannter Verarbeitungsanlagen (z.B. übliche Schmelzklebstoffauftragsanlage oder Extruder) bei Temperaturen im Bereich zwischen 40 °C und 200 °C, bevorzugt zwischen 70 °C und 180 °C, als Raupe oder Strang auf die Bildschirmfront oder die Glastafel aufgebracht. Die Querschnittsform der Raupe oder des Strangs kann rechteckig mit abgerundeter Form der kurzen Seite, dreieckig, rund oder oval sein.

Als besonders günstig hat sich die runde bis ovale Form herausgestellt, da aufgrund der kleineren Kontaktfläche zu der Glasoberfläche die thermoplastische Randabdichtungsmasse langsamer abkühlt und dadurch eine Verpressung der Sandwichanordnung mit geringerem Druck möglich ist. Dies ist insbesondere dann notwendig, wenn die Glastafel dünner als 2 mm ist, da es ansonsten bei der Verpressung von dünnen Gläsern durch zu hohen Druck zum Glasbruch kommen könnte.

Je nach der vorgesehenen Einfüllmethode wird an der Ecke einer Längsseite eine Einfüllöffnung von z.B. 10 bis 70 mm für das Gießharz belassen. Nach Aufbringen der Randabdichtungsmasse wird die Glastafel deckungsgleich auf die Bildschirmfront abgelegt. Die Dicke der Randabdichtung wird mittels Verpressung so eingestellt, dass die Gießharzschichtdicke an keiner Stelle der Sandwichanordnung den Wert von 0,2 mm, bevorzugt 0,5 mm unterschreitet.

Die erfindungsgemäß zu verwendende Randabdichtungsmasse hat den Vorteil, dass sie die geforderte chemische und mechanische Kompatibilität zum Gießharz aufweist.

Da die Fließgrenze der erfindungsgemäß verwendeten Randabdichtungsmasse von der Temperatur abhängig ist, ist es von Vorteil, nach der Aushärtung des Sandwichanordnung diese zu tempern.

Der Vorteil der erfindungsgemäßen Verwendung des beschriebenen Gießharzes liegt in der verminderten Bruchempfindlichkeit der so hergestellten Bildschirme. Durch die gleichzeitige erfindungsgemäße Verwendung der beschriebenen Randabdichtung lässt sich die Bruchempfindlichkeit der Bildschirme nochmals verringern. Von Bedeutung ist die Erfindung insbesondere bei der Herstellung von Flachbildschirmen mit verminderter Bruchempfindlichkeit.

Der Gegenstand der Erfindung wird anhand der folgenden Beispiele näher erläutert.

### Beispiel 1: Synthese eines Basispolymereren auf Basis Poly(meth)acrylat mittels UV-Polymerisation zur späteren Herstellung einer Randabdichtungsmasse

Zu 200 g einer Mischung aus 2-Ethylhexylacrylat, 2-Ethylhexylmethacrylat und Acrylsäure (Gewichtsverhältnis: 65:33:2) wurden 0,8 g (0,4 % bezogen auf Monomere) Benzyldimethylketal gegeben. Die Mischung wurde in einen aus einer Teflonplatte und einer antihaftbeschichteten Polyesterfolie (Hostaphan von der Firma Hoechst) bestehenden Verbund, der im Randbereich durch ein beidseitig mit Haftklebstoff beschichtetes Klebeband von 2 mm Dicke abgedichtet war, gegeben und unter UV-Bestrahlung (Röhrentyp: Philips TL 36 W/08) in 20 Minuten polymerisiert.

### Beispiel 2: Herstellung einer Randabdichtungsmasse auf Basis Poly(meth)acrylat

In einem auf 130 °C geheizten Kneter wurden 60 g (69,0 %) des Basispolymeren aus Beispiel 1 mit 6 g (6,9 %) hochdisperser Kieselsäure (Füllstoff), 20 g (23,0 %) eines Acrylatharzes (Jägotex AP 273 von der Firma Jäger, klebrigmachender Zusatz) und 1 g (1,1 %) Tetrakis[methylen-3-(3,5-di-tert-butyl-4-hydroxyphenyl)-propionat]methan (Ralox 630 von der Firma Raschig, Stabilisator) für 60 Minuten geknetet. Dann wurde 30 Minuten bei 130 °C Vakuum angelegt und anschließend die Masse in eine Kartusche gefüllt.

### Beispiel 3: Herstellung einer Randabdichtungsmasse auf Basis Isobutylen-Polymerer

In einem auf 150 °C geheizten Kneter wurden 997,5 g (47,5 %) Polyisobutylen (Vistanex LM-H von der Firma Exxon, Basispolymer) und 52,5 g (2,5 %) Butylkautschuk (Butyl 065 von der Firma Exxon, Kautschuk) mit 382,2 g (18,2 %) Ruß (Corax N 330 von der Firma Degussa, Füllstoff), 226,8 g (10,8 %) Kreide (Omya 95T von der Firma Omya, Füllstoff), 336,0 g (16,0 %) Zeolith (Baylith L von der Firma Bayer, Füllstoff), 100,8 g (4,8 %) Talkum (Fintalc M10 von der Firma Omya, Füllstoff) und 4,2 g (0,2 %) Tetrakis[methylen-3-(3,5-di-tert-butyl-4-hydroxyphenyl)propionat]methan (Ralox 630 von der Firma Raschig, Stabilisator) für 60 Minuten geknetet. Dann wurde bei 150 °C über 2 Stunden Vakuum angelegt und anschließend die Masse aus dem Kneter ausgetragen. Durch Extrusion dieser Masse bei 130 °C durch eine Runddüse wurde ein Strang mit einem Durchmesser von 3,3 mm erzeugt.

### Beispiel 4: Herstellung eines Gießharzes

In einem 2000 ml-Becherglas wurden als reaktive Acrylatmonomere 1184,0 g (74,0 %) 2-Ethylhexylacrylat und 200,0 g (12,5 %) Acrylsäure, als Weichmacher 120,0 g (7,5 %) Benzyl-2-ethylhexyl-adipat (Adimoll BO der Firma Bayer) und als Haftvermittler 11,2 g (0,7 %) 3-Glycidyloxypropyltrimethoxysilan (Dynasilan GLYMO der Firma Sivento) vorgelegt und über einen Zeitraum von 10 Minuten mit einem Propellerrührer vermischt. Danach wurden als acrylatfunktionelles Oligomer 80,0 g (5,0 %) eines aliphatischen Urethanacrylates (Craynor CN 965 der Firma Cray Valley) innerhalb von 15 Minuten eingemischt. Zuletzt wurden als Fotoinitiator 4,8 g (0,3 %) Oligo [2-hydroxy-2-methyl-1-[4-(1-methylvinyl) phenyl] propanon] (Esacure KIP 150 der Firma Lamberti) zugegeben, und die Mischung wurde 10 Minuten homogenisiert.

### Beispiel 5: Herstellung eines Gießharzes

In einer 2000 ml Polyethylen-Weithalsflasche wurden als reaktive Acrylatmonomere 944,8 g (56,55 %) 2-Ethylhexylacrylat, 224,0 g (14,0 %) n-Butylacrylat und 224,0 g (14,0 %) Acrylsäure, als Weichmacher 200,0 g (12,5 %) Diphenylkresylphosphat (Disflamoll DPK der Firma Bayer), als Haftvermittler 4,8 g (0,3 %) Vinyltrimethoxysilan (Dynasilan VTMO der Firma Sivento), als acrylatfunktionelles Oligomer 40,0 g (2,5 %) eines aliphatischen Urethanacrylates (Craynor CN 965 der Firma Cray Valley) und als Fotoinitiator 2,4 g (0,15 %) 1-Hydroxycyclohexylphenylketon (Irgacure 184 der Firma Ciba Spezialitätenchemie) über einen Zeitraum von 30 Minuten mit Hilfe eines Magnetrührstabes und Magnetrührmotors homogenisiert.

### Beispiel 6: Herstellung eines Gießharzes

In einem 3000 ml-Becherglas wurden als reaktive Acrylatmonomere 874,4 g (54,65 %) 2-Ethylhexylacrylat und 240,0 g (15,0 %) Acrylsäure, als Weichmacher 160,0 g (10 %) Trikresylphosphat (Disflamoll TKP der Firma Bayer), als Haftvermittler 4,8 g (0,3 %) γ-Methacryloxypropyltrimethoxysilan (Dynasilan MEMO der Firma Sivento) und als Fotoinitiator 0,8 g (0,05 %) Benzildimethylketal (Lucirin BDK der Firma BASF) vorgelegt und 15 Minuten mit einem Propellerrührer vermischt. Anschließend wurden als acrylatfunktionelles Oligomer 320,0 g (20,0 %) eines auf 40°C erwärmten aliphatischen Urethanacrylates (Genomer 4215 der Firma Rahn) unter kräftigem Rühren langsam zugegeben, und die Mischung wurde über einen Zeitraum von 20 Minuten homogenisiert.

### Beispiel 7: Bestimmung der Aushärtezeit der Gießharze aus den Beispielen 4 bis 6 bei UV-Bestrahlung durch Float-Glas

Auf eine gereinigte, 4 mm dicke Floatglasplatte der Abmessungen 300 x 300 mm wurde ein 2 mm dickes, 6 mm breites, doppelseitig klebendes, geschäumtes Acrylat-Band (Acrylic Foam Tape 4912 der Firma 3M) am Rand der Glasplatte umlaufend so aufgelegt, dass zwischen den Bandenden eine Lücke von ca. 50 mm als Einfüllöffnung für das Gießharz verblieb. Dann wurde eine zweite, gereinigte 3 mm dicke Glasplatte deckungsgleich aufgelegt und diese Anordnung per Hand verpresst.

In je einen so hergestellten Verbund wurden in einem Winkel von ca. 80° die Gießharze aus den Beispiele 4 bis 6 mittels eines Polyethylenschlauches bis zur Randeinfüllöffnung eingefüllt und die Randöffnungen mit einem Ethylenvinylacetat-Schmelzkleber (Heißschmelzkleber 22 der Firma Chemetall) verschlossen.

Die Sandwichanordnungen wurden unter einem UV-Himmel der Firma Torgauer Maschinenbau GmbH durch Bestrahlung mit Blacklight-Röhren vom Typ TL-D 36W/08 der Firma Philips ausgehärtet, wobei die UV-Strahlungsleistung an der Glasoberfläche 20 W/m² betrug. Zur Bestimmung der Aushärtezeit wurde die Temperatur während der UV-Bestrahlung mit einem Temperaturmessfühler PT 100 an der zu den UV-Röhren abgewandten 4 mm dicken Floatglasscheibe gemessen und mit einem x/y-Schreiber aufgezeichnet. Die Ausgangstemperatur bei Beginn der UV-Bestrahlung war 23°C.

Die Ergebnisse sind in Tabelle 1 aufgeführt.

### Beispiel 8: Bestimmung der Aushärtezeit bei UV-Bestrahlung durch grau gefärbtes Deckglas mit einer Transmission von 60 %

Beispiel 7 wurde mit den Gießharzen aus den Beispielen 4 bis 6 wiederholt, wobei jeweils anstatt der zweiten Floatglasscheibe eine grau durchgefärbte Glasplatte mit einer Transmission von 60 % verwendet wurde. Die gefärbte Glasplatte war bei der Aushärtung des jeweiligen Verbundes den UV-Röhren zugewandt.

Die Ergebnisse sind in Tabelle 1 aufgeführt.

**Tabelle 1:**

| Aushärtezeiten der Gießharze aus den Beispielen 4 bis 6, gemessen nach den Beispielen 7 und 8 | | | | | | |
|---|---|---|---|---|---|---|
| | Aushärtezeiten aus Beispiel 7 (Bestrahlung durch 3 mm dickes Floatglas) | | | Aushärtezeiten aus Beispiel 8 (Bestrahlung durch 3 mm dickes, grau durchgefärbtes Glas) | | |
| | Zeit [Min] bis zum Temperatur-maximum | Temperatur-maximum [°C] | Bestrahlungs-zeit [Min] | Zeit [Min] bis zum Temperatur-maximum | Temperatur-maximum [°C] | Bestrahlungs-zeit [Min] |
| Gießharz aus Beispiel 4 | 10,5 | 72 | 20 | 16,0 | 70 | 25 |
| Gießharz aus Beispiel 5 | 10,5 | 80 | 20 | 17,5 | 19 | 30 |
| Gießharz aus Beispiel 6 | 7,5 | 77 | 15 | 13,5 | 78 | 25 |

### Beispiel 9: Bestimmung des Haze-Wertes für die Gießharze aus den Beispielen 4 bis 6

Der Haze-Wert gibt den Prozentsatz an transmittiertem Licht an, das bei dem Durchstrahlen einer Probe durch Vorwärtsstreuung aus der Richtung des einfallenden Lichtes abgelenkt wird. Als Haze wird nur der Lichtfluß mit einer Ablenkung von mehr als 2,5 ° betrachtet.

Die Messung wurde anhand der mit den Gießharzen aus den Beispielen 4 bis 6 nach Beispiel 7 hergestellten Proben an einem Hazegard-System XL211 der Firma Gardner bei 23 °C durchgeführt. Die Ergebnisse sind in Tabelle 2 aufgeführt.

**Tabelle 2:**

| Haze-Werte am Aufbau 3 mm Floatglas / 2 mm Gießharz / 4 mm Floatglas | | | |
|---|---|---|---|
| | Gießharz aus Beispiel 4 | Gießharz aus Beispiel 5 | Gießharz aus Beispiel 6 |
| Haze-Wert | 0,13 | 0,17 | 0,10 |

### Beispiel 10: Herstellung von Gießharzfolien zum Ermitteln der mechanischen Eigenschaften

Auf eine mit Wasser befeuchtete, 4 mm dicke Floatglasplatte der Abmessungen 300 x 300 mm wurde zunächst eine dünne Polyesterfolie aufgelegt, geglättet und danach ein 2 mm dickes, 6 mm breites, doppelseitig klebendes, geschäumtes Acrylat-Band (Acrylic Foam Tape 4912 der Firma 3M) im Randbereich der Polyesterfolie umlaufend so aufgeklebt, dass zwischen den Bandenden eine Lücke von ca. 50 mm verblieb. Dann wurde eine zweite, ebenfalls mit einer Polyesterfolie beaufschlagte 4 mm dicke Glasplatte deckungsgleich aufgelegt und diese Anordnung per Hand verpresst. Je ein so hergestellter Verbund wurde in allen vier Ecken geklammert und in einem Winkel von ca. 80 ° mittels eines PE-Schlauches über die Randeinfüllöffnung mit je einem Gießharz nach den Beispielen 4 bis 6 befüllt und die Randöffnung mit einem Ethylenvinylacetat-Schmelzkleber (Heißschmelzkleber 21 der Firma Chemetall) verschlossen. Die Aushärtung erfolgte mit Blacklight-Röhren analog Beispiel 7.

Von den ausgehärteten Gießharzfolien wurde nach Abkühlung auf Raumtemperatur die Polyesterfolien abgezogen, um einige mechanische Eigenschaften der ausgehärteten Gießharze zu ermitteln.

### Beispiel 11: Bestimmung der Shore A-Härte der ausgehärteten Gießharze nach den Beispielen 4 bis 6

Aus den nach Beispiel 10 hergestellten Gießharzfolien wurden jeweils drei 40 x 40 mm große Abschnitte herausgeschnitten, deckungsgleich aufeinander abgelegt, so dass sich eine Probendicke von ca. 6 mm ergab, und mit Talkum bestäubt. Die Prüfung der Shore A-Härte erfolgte 24 h nach Herstellung der Folien gemäß DIN 53505. Die Ergebnisse sind in Tabelle 3 aufgeführt.

### Beispiel 12: Bestimmung der Eigenfestigkeit der ausgehärteten Gießharze nach den Beispielen 4 bis 6

An den nach Beispiel 10 hergestellten Gießharzfolien wurden nach 24h-Lagerung bei Raumtemperatur mit einer Zwick Universalprüfmaschine die Zugfestigkeiten, Reißdehnungen und Spannungswerte nach DIN 53504 bei einer Zuggeschwindigkeit von 100 mm/min am Normstab S2 bei 23 °C ermittelt. Die Ergebnisse sind in Tabelle 3 aufgeführt.

**Tabelle 3:**

| Mechanische Eigenschaften der Gießharze aus Beispiel 4 bis 6 | | | |
|---|---|---|---|
| | Gießharz aus Beispiel 4 | Gießharz aus Beispiel 5 | Gießharz aus Beispiel 6 |
| Shore A-Härte | 16 | 13 | 47 |
| Dehnspannung 25% [MPa] | 0,11 | 0,09 | 0,42 |
| Dehnspannung 50% [Mpa] | 0,17 | 0,13 | 0,66 |
| Dehnspannung 100% [MPa] | 0,26 | 0,18 | 1,22 |
| Dehnung [%] | 259 | 419 | 130 |
| Zugfestigkeit [MPa] | 0,95 | 1,28 | 1,81 |

### Beispiel 13: Bestimmung des Polymerisationsschwundes der Gießharze aus den Beispielen 4 bis 6

Unter Polymerisationsschwund der Gießharze wird die Differenz des Volumens vor und nach der Aushärtung in Prozent verstanden.

Zur Bestimmung des Polymerisationsschwundes wurde für die Gießharze aus den Beispielen 4 bis 6 bei 20 °C mit einer Spindel jeweils die Dichte der flüssigen Mischungen und nach Aushärtung die Dichte an Folienabschnitten unter Verwendung einer Sartortius RC 250 S-Waage mit speziellem Aufbau nach dem Auftriebsprinzip durch Wägung in Luft und Ethanol ermittelt.

Der Polymerisationsschwund wurde nach der Formel [1/ρ fl - 1/ρ folie]*100 / [1/ρ fl] berechnet, wobei ρ fl die Dichte des flüssigen Gießharzes und ρ folie die Dichte des ausgehärteten Gießharzes bedeuten. Die Ergebnisse sind in Tabelle 4 aufgeführt.

**Tabelle 4:**

| Dichte und Polymerisationsschwund der Gießharze | | | |
|---|---|---|---|
| | Gießharz aus Beispiel 4 | Gießharz aus Beispiel 5 | Gießharz aus Beispiel 6 |
| Dichte des flüssigen Gießharzes [g/ml] | 0,923 | 0,944 | 0,977 |
| Dichte des ausgehärteten Gießharzes [g/cm³] | 1,031 | 1,066 | 1,084 |
| Polymerisationsschwund [%] | 10,5 | 11,5 | 9,9 |

### Beispiel 14: Bestimmung der Viskosität der Gießharze aus den Beispielen 4 bis 6

Für die Gießharze der Beispiele 4 bis 6 wurden an einem Rotationsviskosimeter (Rheolab MC20 der Firma Physica) die Viskositäten mit einem Kegel MK20/157 (25 mm Durchmesser, 1 °) bei einem Geschwindigkeitsgefälle von D = 40 1/s bei 20 °C ermittelt. Die Ergebnisse sind in Tabelle 5 aufgeführt.

**Tabelle 5:**

| Viskositäten der Gießharze | | | |
|---|---|---|---|
| | Gießharz aus Beispiel 4 | Gießharz aus Beispiel 5 | Gießharz aus Beispiel 6 |
| Viskosität [mPa*s] | 3,4 | 2,3 | 17,6 |

### Beispiel 15: Herstellung einer Sandwichanordnung aus Bildschirm, Randabdichtung aus Beispiel 2, Gießharz aus Beispiel 4 und Glastafel

Auf eine gereinigte, grau eingefärbte Frontglastafel (Transmission 60 %) wurde umlaufend die Randabdichtungsmasse aus Beispiel 2 mit einer heizbaren Kartuschenpistole bei 150 °C als Strang mit etwa 4 mm Durchmesser so aufgetragen, dass zwischen dem Auftragsanfang und Auftragsende eine 50 mm breite Öffnung für die Gießharzbefüllung verblieb. Die Frontglastafel wurde unmittelbar nach Applikation der Randabdichtungsmasse auf einen gereinigten Flachbildschirm (32 Zoll, Format 16:9) aufgelegt und durch Belastung mit 80 kg soweit verpresst, dass sich in der Mitte der Anordnung zwischen dem Frontglas und der Oberfläche des Flachbildschirmes ein Abstand von etwa 1 mm ergab.

In diesen Verbund wurde in einem Winkel von ca. 30 ° mittels eines PE-Schlauches über die Randöffnung das Gießharz aus Beispiel 4 bis zur Einfüllöffnung eingefüllt und die Öffnung mit einem Ethylenvinylacetat-Schmelzkleber (Heißschmelzkleber 21 der Firma Chemetall) verschlossen.

Die Sandwichanordnung wurde unter einem UV-Himmel der Firma Torgauer Maschinenbau GmbH durch Bestrahlung mit Blacklight-Röhren vom Typ TL-D 36W/08 der Firma Philips innerhalb von 25 Minuten ausgehärtet, wobei die UV-Strahlungsleistung an der Oberfläche des Frontglases 20 W/m² betrug.

### Beispiel 16: Herstellung einer Sandwichanordnung aus Bildschirm, Randabdichtung aus Beispiel 3, Gießharz aus Beispiel 5 und Glastafel

Auf eine gereinigte, grau eingefärbte Frontglastafel (Transmission 60%) wurde umlaufend die Randabdichtungsmasse aus Beispiel 3 als Strang mit 3,3 mm Durchmesser so aufgelegt, dass zwischen Anfang und Ende des Stranges eine etwa 50 mm breite Öffnung für die Gießharzbefüllung verblieb. Anschließend wurde die Frontglastafel auf einen gereinigten Flachbildschirm (32 Zoll, Format 16:9) aufgelegt und durch Belastung mit 50 kg soweit verpresst, dass sich in der Mitte der Anordnung zwischen dem Frontglas und der Oberfläche des Flachbildschirmes ein Abstand von etwa 0,5 mm ergab.

In diesen Verbund wurde in einem Winkel von ca. 30 ° mittels eines PE-Schlauches über die Randeinfüllöffnung das Gießharz gemäß Beispiel 5 bis knapp unterhalb der Einfüllöffnung eingegossen und die Randöffnung mit einem Ethylenvinylacetat-Schmelzkleber (Heißschmelzkleber 21 der Firma Chemetall) verschlossen.

Die Sandwichanordnung wurde unter einem UV-Himmel der Firma Torgauer Maschinenbau GmbH durch Bestrahlung mit Blacklight-Röhren vom Typ TL-D 36W/08 der Firma Philips innerhalb von 30 Minuten ausgehärtet, wobei die UV-Strahlungsleistung an der Oberfläche des Frontglases 25 W/m² betrug.

### Beispiel 17: Herstellung einer Sandwichanordnung aus Bildschirm, Randabdichtung, Gießharz aus Beispiel 6 und Glastafel

Auf einen gereinigten Flachbildschirm mit 32 Zoll und dem Format 16:9 wurde umlaufend eine dauerplastische Randabdichtungsmasse auf Basis Isobutylenpolymer (Naftotherm BU-TPS der Firma Chemetall) in Form einer auf 4,6 mm Durchmesser extrudierten Rundschnur so aufgetragen, dass zwischen den beiden Schnurenden eine Lücke von ca. 50 mm als Einfüllöffnung für das Gießharz verblieb. Anschließend wurde eine gereinigte, grau eingefärbte Frontglastafel (Transmission 60 %) aufgelegt und durch Belastung mit 60 kg soweit verpresst, dass sich in der Mitte zwischen dem Frontglas und der Oberfläche des Flachbildschirmes ein Abstand von etwa 1 mm ergab.

In diesen Verbund wurde in einem Winkel von ca. 45 ° mittels eines PE-Schlauches über die Randöffnung das Gießharz aus Beispiel 6 bis knapp unterhalb der Einfüllöffnung eingegossen und die Randöffnung mit einem Ethylenvinylacetat-Schmelzkleber (Heißschmelzkleber 21 der Firma Chemetall) verschlossen.

Die Sandwichanordnung wurde unter einem UV-Himmel der Firma Torgauer Maschinenbau GmbH durch UV-Bestrahlung mit Blacklight-Röhren vom Typ TL-D 36W/08 der Firma Philips innerhalb von 25 Minuten ausgehärtet, wobei die UV-Strahlungsleistung an der Oberfläche des Frontglases 20 W/m² betrug.

## Patentansprüche

1. Verwendung eines aus reaktiven Acrylat- und/oder Methacrylatmonomeren, Acrylat- und/oder Methacrylatoligomeren, Haftvermittlern und Initiatoren bestehenden transparenten Gießharzes und einer Randabdichtung zur Herstellung einer Sandwichanordnung, die aus einem Bildschirm, einer Gießharzschicht, einer die Gießharzschicht seitlich umgebenden Randabdichtung und einer Glastafel besteht, wobei das Gießharz folgende Inhaltsstoffe enthält (Angaben in Gewichts-%, Summe der genannten Inhaltsstoffe = 100 %):
| | | |
|---|---|---|
| a) | reaktive Acrylat- und/oder Methacrylatmonomere | 50 - 97 |
| b) | acrylat- und/oder methacrylatfunktionelle Oligomere | 1 - 40 |
| c) | nichtreaktive Acrylat- und/oder Methacrylat-Homo- und -Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,01 - 3 |
| h) | klebrigmachende Zusätze | 0 - 5 |
| i) | Stabilisatoren | 0 - 2 |

2. Verwendung nach Anspruch 1, **dadurch gekennzeichnet, dass** das Gießharz folgende Inhaltsstoffe enthält (Angaben in Gewichts-%, Summe der genannten Inhaltsstoffe = 100 %):
| | | |
|---|---|---|
| a) | reaktive Acrylat- und/oder Methacrylatmonomere | 80 - 97 |
| b) | acrylat- und/oder methacrylatfunktionelle Oligomere | 1 - 20 |
| c) | nichtreaktive Acrylat- und/oder Methacrylat-Homo- und -Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,05 - 2 |
| h) | klebrigmachende Zusätze | 0 - 5 |
| i) | Stabilisatoren | 0 - 2 |

3. Verwendung nach Anspruch 1 oder 2, **dadurch gekennzeichnet, dass** die Randabdichtung aus einer dauerplastischen Masse besteht, welche thermoplastische Eigenschaften besitzt und die nach dem Aufschmelzen als Raupe oder Strang auf die Bildschirmfront oder die Glastafel aufgebracht wird.

4. Verwendung nach Anspruch 3, **dadurch gekennzeichnet, dass** die Randabdichtungsmasse folgende Inhaltsstoffe enthält (Angaben in Gewichts-%, Summe der genannten Inhaltsstoffe = 100 %):
| | | |
|---|---|---|
| a) | Basispolymer | 30 - 100 |
| b) | thermoplastische Polymere | 0 - 50 |
| c) | natürliche und synthetische Kautschuke | 0 - 50 |
| d) | klebrigmachende Zusätze | 0 - 30 |
| e) | Weichmacher | 0 - 50 |
| f) | Haftvermittler | 0 - 5 |
| g) | Stabilisatoren | 0 - 5 |
| h) | verstärkende und nichtverstärkende Füllstoffe | 0 - 70 |
wobei das Basispolymer aus einem Homo-, Co- oder Terpolymeren des Isobutylens oder einer Mischung davon besteht oder aus einem Homo- und/oder Copolymeren von Acrylaten und/oder Methacrylaten oder Mischungen davon besteht.

5. Verwendung nach Anspruch 4, **dadurch gekennzeichnet, dass** die Randabdichtungsmasse folgende Inhaltsstoffe enthält (Angaben in. Gewichts-%, Summe der genannten Inhaltsstoffe = 100 %):
| | | |
|---|---|---|
| a) | Basispolymer | 40 - 100 |
| b) | thermoplastische Polymere | 0 - 30 |
| c) | natürliche und synthetische Kautschuke | 0 - 30 |
| d) | klebrigmachende Zusätze | 0 - 25 |
| e) | Weichmacher | 0 - 30 |
| f) | Haftvermittler | 0 - 3 |
| g) | Stabilisatoren | 0 - 3 |
| h) | verstärkende und nichtverstärkende Füllstoffe | 0 - 60 |

6. Verwendung nach einem der Ansprüche 3 bis 5, **dadurch gekennzeichnet, dass** die Fließgrenze der Randabdichtung maximal 4000 Pa bei 120 °C beträgt (gemessen mit einem Rheometer mit Platte/Platte-Geometrie, Messplatte 25 cm Durchmesser, Messung in Oszillation bei Oszillationsfrequenz 1 Hz, Drehmomentbereich von 0,1 bis 100 mNm, Schergeschwindigkeit von 10⁻⁴ bis 1 s⁻¹).

7. Verwendung nach Anspruch 6, **dadurch gekennzeichnet, dass** die Fließgrenze der Randabdichtung maximal 2000 Pa bei 120 °C beträgt

8. Verwendung nach einem der Ansprüche 1 bis 7, **dadurch gekennzeichnet, dass** die Herstellung der Sandwichanordnung aus folgenden Verfahrensschritten besteht:
1. Reinigen und Trocknen des Bildschirmes und der Glastafel
2. Aufbringen einer Randabdichtung auf die Bildschirmfront oder auf die Glastafel
3. Deckungsgleiches Auflegen der Glastafel auf die Bildschirmfront
4. Verpressen des erhaltenen Verbundes aus Bildschirm und Glastafel auf die gewünschte Distanz von Bildschirm und Glastafel
5. Einfüllen des Gießharzes
6. Entlüftung des Zwischenraumes und Verschließen der Einfüllöffnung
7. Kontrolle des mit Gießharz befüllten Zwischenraumes auf Luftblasenfreiheit
8. Aushärtung des Gießharzes durch Bestrahlung mit UV-Licht
9. Endkontrolle der fertigen Sandwichanordnung

9. Verwendung eines aus reaktiven Acrylatmonomeren, Acrylatoligomeren, Haftvermittlern und Initiatoren bestehenden transparenten Gießharzes und einer Randabdichtung zur Herstellung einer Sandwichanordnung, die aus einem Bildschirm, einer Gießharzschicht, einer die Gießharzschicht seitlich umgebenden Randabdichtung und einer Glastafel besteht, wobei das Gießharz folgende Inhaltsstoffe enthält (Angaben in Gewichts-%, Summe der genannten Inhaltsstoffe = 100 %):
| | | |
|---|---|---|
| a) | reaktive Acrylatmonomere | 50 - 97 |
| b) | acrylatfunktionelle Oligomere | 1 - 40 |
| c) | nichtreaktive Acrylat- Homo- und -Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,01 - 3 |
| h) | klebrigmachende Zusätze | 0 - 5 |
| i) | Stabilisatoren | 0 - 2 |

10. Verwendung nach Anspruch 9, **dadurch gekennzeichnet, dass** das Gießharz folgende Inhaltsstoffe enthält (Angaben in Gewichts-%, Summe der genannten Inhaltsstoffe = 100 %):
| | | |
|---|---|---|
| a) | reaktive Acrylatmonomere | 80 - 97 |
| b) | acrylatfunktionelle Oligomere | 1 - 20 |
| c) | nichtreaktive Acrylat- Homo- und -Copolymere | 0 - 15 |
| d) | Füllstoffe | 0 - 5 |
| e) | Weichmacher | 0 - 15 |
| f) | Haftvermittler | 0,3 - 3 |
| g) | Fotoinitiatoren | 0,05 - 2 |
| h) | klebrigmachende Zusätze | 0 - 5 |
| i) | Stabilisatoren | 0 - 2 |

11. Verwendung nach Anspruch 9 oder 10, **dadurch gekennzeichnet, dass** die Randabdichtung aus einer dauerplastischen Masse besteht, welche thermoplastische Eigenschaften besitzt und die nach dem Aufschmelzen als Raupe oder Strang auf die Bildschirmfront oder die Glastafel aufgebracht wird.

12. Verwendung nach Anspruch 11, **dadurch gekennzeichnet, dass** die Randabdichtungsmasse folgende Inhaltsstoffe enthält (Angaben in Gewichts-%, Summe der genannten Inhaltsstoffe = 100 %):
| | | |
|---|---|---|
| a) | Basispolymer | 30 - 100 |
| b) | thermoplastische Polymere | 0 - 50 |
| c) | natürliche und synthetische Kautschuke | 0 - 50 |
| d) | klebrigmachende Zusätze | 0 - 30 |
| e) | Weichmacher | 0 - 50 |
| f) | Haftvermittler | 0 - 5 |
| g) | Stabilisatoren | 0 - 5 |
| h) | verstärkende und nichtverstärkende Füllstoffe | 0 - 70 |
wobei das Basispolymer aus einem Homo-, Co- oder Terpolymeren des Isobutylens oder einer Mischung davon besteht oder aus einem Homo- und/oder Copolymeren von Acrylaten und/oder Methacrylaten oder Mischungen davon besteht.

13. Verwendung nach Anspruch 12, **dadurch gekennzeichnet, dass** die Randabdichtungsmasse folgende Inhaltsstoffe enthält (Angaben in Gewichts-%, Summe der genannten Inhaltsstoffe = 100 %):
| | | |
|---|---|---|
| a) | Basispolymer | 40 - 100 |
| b) | thermoplastische Polymere | 0 - 30 |
| c) | natürliche und synthetische Kautschuke | 0 - 30 |
| d) | klebrigmachende Zusätze | 0 - 25 |
| e) | Weichmacher | 0 - 30 |
| f) | Haftvermittler | 0 - 3 |
| g) | Stabilisatoren | 0 - 3 |
| h) | verstärkende und nichtverstärkende Füllstoffe | 0 - 60 |

14. Verwendung nach einem der Ansprüche 11 bis 13, **dadurch gekennzeichnet, dass** die Fließgrenze der Randabdichtung maximal 4000 Pa bei 120 °C beträgt (gemessen mit einem Rheometer mit Platte/Platte-Geometrie, Messplatte 25 cm Durchmesser, Messung in Oszillation bei Oszillationsfrequenz 1 Hz, Drehmomentbereich von 0,1 bis 100 mNm, Schergeschwindigkeit von 10⁻⁴ bis 1 s⁻¹).

15. Verwendung nach Anspruch 14, **dadurch gekennzeichnet, dass** die Fließgrenze der Randabdichtung maximal 2000 Pa bei 120 °C beträgt

16. Verwendung nach einem der Ansprüche 9 bis 15, **dadurch gekennzeichnet, dass** die Herstellung der Sandwichanordnung aus folgenden Verfahrensschritten besteht:
1. Reinigen und Trocknen des Bildschirmes und der Glastafel
2. Aufbringen einer Randabdichtung auf die Bildschirmfront oder auf die Glastafel
3. Deckungsgleiches Auflegen der Glastafel auf die Bildschirmfront
4. Verpressen des erhaltenen Verbundes aus Bildschirm und Glastafel auf die gewünschte Distanz von Bildschirm und Glastafel
5. Einfüllen des Gießharzes
6. Entlüftung des Zwischenraumes und Verschließen der Einfüllöffnung
7. Kontrolle des mit Gießharz befüllten Zwischenraumes auf Luftblasenfreiheit
8. Aushärtung des Gießharzes durch Bestrahlung mit UV-Licht
9. Endkontrolle der fertigen Sandwichanordnung

## Claims

1. Use of a transparent casting resin, consisting of reactive acrylate and/or methacrylate monomers, acrylate and/or methacrylate oligomers, coupling agents and initiators, and of an edge seal for the purpose of producing a sandwich arrangement that consists of a display screen, a layer of casting resin, an edge seal laterally surrounding the layer of casting resin, and a sheet of glass, the casting resin containing the following constituents (figures in percentage by weight, sum of the stated constituents = 100%):
| | |
|---|---|
| a) reactive acrylate and/or methacrylate monomers | 50 - 97 |
| b) acrylate-functional and/or methacrylate-functional oligomers | 1 - 40 |
| c) non-reactive acrylate and/or methacrylate homopolymers and copolymers | 0 - 15 |
| d) Fillers | 0 - 5 |
| e) Plasticisers | 0 - 15 |
| f) coupling agents | 0.3. - 3 |
| g) Photoinitiators | 0.01 - 3 |
| h) Tackifying additives | 0 - 5 |
| i) Stabilisers | 0 - 2 |

2. Use according to Claim 1, **characterised in that** the casting resin contains the following constituents (figures in percentage by weight, sum of the stated constituents = 100%):
| | | |
|---|---|---|
| a) | reactive acrylate and/or methacrylate monomers | 80 - 97 |
| b) | acrylate-functional and/or methacrylate-functional oligomers | 1 - 20 |
| c) | non-reactive acrylate and/or methacrylate homopolymers and copolymers | 0 - 15 |
| d) | Fillers | 0 - 5 |
| e) | Plasticisers | 0 - 15 |
| f) | coupling agents | 0.3 - 3 |
| g) | Photoinitiators | 0.05 - 2 |
| h) | Tackifying additives | 0 - 5 |
| i) | Stabilisers | 0 - 2 |

3. Use according to Claim 1 or 2, **characterised in that** the edge seal consists of a permanently flexible compound which has thermoplastic properties and which, after being fused, is applied in the form of a bead or strand onto the front of the display screen or onto the sheet of glass.

4. Use according to Claim 3, **characterised in that** the edge-sealing compound contains the following constituents (figures in percentage by weight, sum of the stated constituents = 100%):
| | | |
|---|---|---|
| a) | base polymer | 30 - 100 |
| b) | thermoplastic polymers | 0 - 50 |
| c) | Natural and synthetic rubbers | 0 - 50 |
| d) | tackifying resins | 0 - 30 |
| e) | Plasticisers | 0 - 50 |
| f) | coupling agents | 0 - 5 |
| g) | Stabilisers | 0 - 5 |
| h) | reinforcing and non-reinforcing fillers | 0 - 70 |
wherein the base polymer consists of a homopolymer, copolymer or terpolymer of isobutylene or a mixture thereof or of a homopolymer and/or copolymer of acrylates and/or methacrylates or mixtures thereof.

5. Use according to Claim 4, **characterised in that** the edge-sealing compound contains the following constituents (figures in percentage by weight, sum of the stated constituents = 100%):
| | | |
|---|---|---|
| a) | base polymer | 40 - 100 |
| b) | thermoplastic polymers | 0 - 30 |
| c) | Natural and synthetic rubbers | 0 - 30 |
| d) | tackifying resins | 0 - 25 |
| e) | plasticisers | 0 - 30 |
| f) | coupling agents | 0 - 3 |
| g) | stabilisers | 0 - 3 |
| h) | reinforcing and non-reinforcing fillers | 0 - 60 |

6. Use according to one of Claims 3 to 5, **characterised in that** the yield-point of the edge seal amounts to a maximum of 4000 Pa at 120 °C (measured with a rheometer having plate/plate geometry, measuring-plate diameter 25 cm, measurement in oscillation at oscillation frequency 1 Hz, torque range from 0.1 mNm to 100 mNm, rate of shear from 10⁻⁴ s⁻¹ to 1 s⁻¹).

7. Use according to Claim 6, **characterised in that** the yield-point of the edge seal amounts to a maximum of 2000 Pa at 120 °C.

8. Use according to one of Claims 1 to 7, **characterised in that** the production of the sandwich arrangement consists of the following process steps:
1. Cleaning and drying of the display screen and of the sheet of glass
2. Application of an edge seal onto the front of the display screen or onto the sheet of glass
3. Congruent placement of the sheet of glass onto the front of the display screen
4. Pressing of the composite obtained, consisting of display screen and sheet of glass, to the desired distance between display screen and sheet of glass
5. Charging of the casting resin
6. De-aeration of the interspace and sealing of the charging opening
7. Inspection of the interspace filled with casting resin for freedom from air bubbles
8. Curing of the casting resin by irradiation with UV light
9. Final inspection of the finished sandwich arrangement

9. Use of a transparent casting resin, consisting of reactive acrylate monomers, acrylate oligomers, coupling agents and initiators, and of an edge seal for the purpose of producing a sandwich arrangement that consists of a display screen, a layer of casting resin, an edge seal laterally surrounding the layer of casting resin, and a sheet of glass, the casting resin containing the following constituents (figures in percentage by weight, sum of the stated constituents = 100%) :
| | | |
|---|---|---|
| a) | reactive acrylate monomers | 50 - 97 |
| b) | acrylate-functional oligomers | 1 - 40 |
| c) | non-reactive acrylate homopolymers and copolymers | 0 - 15 |
| d) | fillers | 0 - 5 |
| e) | plasticisers | 0 - 15 |
| f) | coupling agents | 0.3 - 3 |
| g) | photoinitiators | 0.01 - 3 |
| h) | tackifying additives | 0 - 5 |
| i) | stabilisers | 0 - 2 |

10. Use according to Claim 9, **characterised in that** the casting resin contains the following constituents (figures in percentage by weight, sum of the stated constituents = 100%):
| | | |
|---|---|---|
| a) | reactive acrylate monomers | 80 - 97 |
| b) | acrylate-functional oligomers | 1 - 20 |
| c) | non-reactive acrylate homopolymers and copolymers | 0 - 15 |
| d) | fillers | 0 - 5 |
| e) | plasticisers | 0 - 15 |
| f) | coupling agents | 0.3 - 3 |
| g) | photoinitiators | 0.05 - 2 |
| h) | tackifying additives | 0 - 5 |
| i) | stabilisers | 0 - 2 |

11. Use according to Claim 9 or 10, **characterised in that** the edge seal consists of a permanently flexible compound which has thermoplastic properties and which, after being fused, is applied in the form of a bead or strand onto the front of the display screen or onto the sheet of glass.

12. Use according to Claim 11, **characterised in that** the edge-sealing compound contains the following constituents (figures in percentage by weight, sum of the stated constituents = 100%):
| | | |
|---|---|---|
| a) | base polymer | 30 - 100 |
| b) | thermoplastic polymers | 0 - 50 |
| c) | natural and synthetic rubbers | 0 - 50 |
| d) | tackifying resins | 0 - 30 |
| e) | plasticisers | 0 - 50 |
| f) | coupling agents | 0 - 5 |
| g) | stabilisers | 0 - 5 |
| h) | reinforcing and non-reinforcing fillers | 0 - 70 |
wherein the base polymer consists of a homopolymer, copolymer or terpolymer of isobutylene or a mixture thereof or of a homopolymer and/or copolymer of acrylates and/or methacrylates or mixtures thereof.

13. Use according to Claim 12, **characterised in that** the edge-sealing compound contains the following constituents (figures in percentage by weight, sum of the stated constituents = 100%):
| | | |
|---|---|---|
| a) | base polymer | 40 - 100 |
| b) | thermoplastic polymers | 0 - 30 |
| c) | natural and synthetic rubbers | 0 - 30 |
| d) | tackifying resins | 0 - 25 |
| e) | Plasticisers | 0 - 30 |
| f) | coupling agents | 0 - 3 |
| g) | Stabilisers | 0 - 3 |
| h) | reinforcing and non-reinforcing fillers | 0 - 60 |

14. Use according to one of Claims 11 to 13, **characterised in that** the yield-point of the edge seal amounts to a maximum of 4000 Pa at 120 °C (measured with a rheometer having plate/plate geometry, measuring-plate diameter 25 cm, measurement in oscillation at oscillation frequency 1 Hz, torque range from 0.1 mNm to 100 mNm, rate of shear from 10⁻⁴ s⁻¹ to 1 s⁻¹).

15. Use according to Claim 14, **characterised in that** the yield-point of the edge seal amounts to a maximum of 2000 Pa at 120 °C.

16. Use according to one of Claims 9 to 15, **characterised in that** the production of the sandwich arrangement consists of the following process steps:
1. Cleaning and drying of the display screen and of the sheet of glass
2. Application of an edge seal onto the front of the display screen or onto the sheet of glass
3. Congruent placement of the sheet of glass onto the front of the display screen
4. Pressing of the composite obtained, consisting of display screen and sheet of glass, to the desired distance between display screen and sheet of glass
5. Charging of the casting resin
6. De-aeration of the interspace and sealing of the charging opening
7. Inspection of the interspace filled with casting resin for freedom from air bubbles
8. Curing of the casting resin by irradiation with UV light
9. Final inspection of the finished sandwich arrangement.

## Revendications

1. Emploi d'une résine de coulée transparente, constituée de monomères réactifs de type acrylate et/ou méthacrylate, d'oligomères d'acrylate et/ou de méthacrylate, de promoteurs d'adhésion et d'amorceurs, et d'un joint étanche de bordure pour la fabrication d'un dispositif sandwich constitué d'un écran, d'une couche de résine de coulée, d'un joint étanche de bordure entourant de tous côtés la couche de résine de coulée, et d'un panneau de verre, ladite résine de coulée contenant les constituants suivants (les teneurs sont exprimées en pourcentages pondéraux, et le total des teneurs en les divers constituants vaut 100 %) :
| | | |
|---|---|---|
| a) | monomères réactifs de type acrylate et/ou méthacrylate | 50 - 97 |
| b) | oligomères fonctionnels d'acrylate et/ou de méthacrylate | 1 - 40 |
| c) | homopolymères et copolymères non réactifs d'acrylate et/ou de méthacrylate | 0 - 15 |
| d) | charges | 0 - 5 |
| e) | plastifiants | 0 - 15 |
| f) | promoteurs d'adhésion | 0,3 - 3 |
| g) | photoamorceurs | 0,01 - 3 |
| h) | adjuvants de pégosité | 0 - 5 |
| i) | stabilisants | 0 - 2 |

2. Emploi conforme à la revendication 1, **caractérisé en ce que** ladite résine de coulée contient les constituants suivants (les teneurs sont exprimées en pourcentages pondéraux, et le total des teneurs en les divers constituants vaut 100 %) :
| | | |
|---|---|---|
| a) | monomères réactifs de type acrylate et/ou méthacrylate | 80 - 97 |
| b) | oligomères fonctionnels d'acrylate et/ou de méthacrylate | 1 - 20 |
| c) | homopolymères et copolymères non réactifs d'acrylate et/ou de méthacrylate | 0 - 15 |
| d) | charges | 0 - 5 |
| e) | plastifiants | 0 - 15 |
| f) | promoteurs d'adhésion | 0,3 - 3 |
| g) | photoamorceurs | 0,05 - 2 |
| h) | adjuvants de pégosité | 0 - 5 |
| i) | stabilisants | 0 - 2 |

3. Emploi conforme à la revendication 1 ou 2, **caractérisé en ce que** le joint étanche de bordure est constitué d'une masse de matériau durablement plastique qui présente des caractéristiques thermoplastiques et qu'on dépose après fusion, sous forme de cordon ou de boudin, sur la face avant de l'écran ou sur le panneau de verre.

4. Emploi conforme à la revendication 3, **caractérisé en ce que** le matériau du joint étanche de bordure contient les constituants suivants (les teneurs sont exprimées en pourcentages pondéraux, et le total des teneurs en les divers constituants vaut 100 %) :
| | | |
|---|---|---|
| a) | polymère de base | 30 - 100 |
| b) | polymères thermoplastiques | 0 - 50 |
| c) | caoutchoucs naturels et synthétiques | 0 - 50 |
| d) | adjuvants de pégosité | 0 - 30 |
| e) | plastifiants | 0 - 50 |
| f) | promoteurs d'adhésion | 0 - 5 |
| g) | stabilisants | 0 - 5 |
| h) | charges renforçantes et non-renforçantes | 0 - 70 |
le polymère de base étant constitué d'un homopolymère, copolymère ou terpolymère d'isobutylène ou d'un mélange de tels polymères, ou bien d'un homopolymère et/ou d'un copolymère d'acrylates et/ou méthacrylates ou d'un mélange de tels polymères.

5. Emploi conforme à la revendication 4, **caractérisé en ce que** le matériau du joint étanche de bordure contient les constituants suivants (les teneurs sont exprimées en pourcentages pondéraux, et le total des teneurs en les divers constituants vaut 100 %) :
| | | |
|---|---|---|
| a) | polymère de base | 40 - 100 |
| b) | polymères thermoplastiques | 0 - 30 |
| c) | caoutchoucs naturels et synthétiques | 0 - 30 |
| d) | adjuvants de pégosité | 0 - 25 |
| e) | plastifiants | 0 - 30 |
| f) | promoteurs d'adhésion | 0 - 3 |
| g) | stabilisants | 0 - 3 |
| h) | charges renforçantes et non-renforçantes | 0 - 60 |

6. Emploi conforme à l'une des revendications 3 à 5, **caractérisé en ce que** le seuil d'écoulement du joint étanche de bordure (mesuré à l'aide d'un rhéomètre à géométrie plan-plan, muni de disques de mesure de 25 cm de diamètre, et en mode oscillatoire à une fréquence d'oscillations de 1 Hz, pour un couple de rotation de 0,1 à 100 mN.m et une vitesse de cisaillement de 10⁻⁴ à 1 s⁻¹) vaut au maximum 4 000 Pa à 120 °C.

7. Emploi conforme à la revendication 6, **caractérisé en ce que** le seuil d'écoulement du joint étanche de bordure vaut au maximum 2 000 Pa à 120 °C.

8. Emploi conforme à l'une des revendications 1 à 7, **caractérisé en ce que** la fabrication du dispositif sandwich comporte les étapes de procédé suivantes :
1. nettoyage et séchage de l'écran et du panneau de verre
2. dépôt d'un joint étanche de bordure sur la face avant de l'écran ou sur le panneau de verre
3. mise du panneau de verre en exact recouvrement sur la face avant de l'écran
4. pressage de l'objet composite obtenu, formé de l'écran et du panneau de verre, pour établir la distance voulue entre l'écran et le panneau de verre
5. remplissage de l'espace intérieur avec la résine de coulée
6. évacuation de l'air présent dans l'espace intérieur et fermeture de l'orifice de remplissage
7. vérification de l'absence de bulles d'air dans l'espace intérieur rempli de résine de coulée
8. durcissement de la résine de coulée par irradiation avec un rayonnement ultra-violet
9. vérification finale du dispositif sandwich fini.

9. Emploi d'une résine de coulée transparente, constituée de monomères réactifs de type acrylate, d'oligomères d'acrylate, de promoteurs d'adhésion et d'amorceurs, et d'un joint étanche de bordure pour la fabrication d'un dispositif sandwich constitué d'un écran, d'une couche de résine de coulée, d'un joint étanche de bordure entourant de tous côtés la couche de résine de coulée, et d'un panneau de verre, ladite résine de coulée contenant les constituants suivants (les teneurs sont exprimées en pourcentages pondéraux, et le total des teneurs en les divers constituants vaut 100 %) :
| | | |
|---|---|---|
| a) | monomères réactifs de type acrylate | 50 - 97 |
| b) | oligomères fonctionnels d'acrylate | 1 - 40 |
| c) | homopolymères et copolymères non réactifs d'acrylate | 0 - 15 |
| d) | charges | 0 - 5 |
| e) | plastifiants | 0 - 15 |
| f) | promoteurs d'adhésion | 0,3 - 3 |
| g) | photoamorceurs | 0,01 - 3 |
| h) | adjuvants de pégosité | 0 - 5 |
| i) | stabilisants | 0 - 2 |

10. Emploi conforme à la revendication 9, **caractérisé en ce que** ladite résine de coulée contient les constituants suivants (les teneurs sont exprimées en pourcentages pondéraux, et le total des teneurs en les divers constituants vaut 100 %) :
| | | |
|---|---|---|
| a) | monomères réactifs de type acrylate | 80 - 97 |
| b) | oligomères fonctionnels d'acrylate | 1 - 20 |
| c) | homopolymères et copolymères non réactifs d'acrylate | 0 - 15 |
| d) | charges | 0 - 5 |
| e) | plastifiants | 0 - 15 |
| f) | promoteurs d'adhésion | 0,3 - 3 |
| g) | photoamorceurs | 0,05 - 2 |
| h) | adjuvants de pégosité | 0 - 5 |
| i) | stabilisants | 0 - 2 |

11. Emploi conforme à la revendication 9 ou 10, **caractérisé en ce que** le joint étanche de bordure est constitué d'une masse de matériau durablement plastique qui présente des caractéristiques thermoplastiques et qu'on dépose après fusion, sous forme de cordon ou de boudin, sur la face avant de l'écran ou sur le panneau de verre.

12. Emploi conforme à la revendication 11, **caractérisé en ce que** le matériau du joint étanche de bordure contient les constituants suivants (les teneurs sont exprimées en pourcentages pondéraux, et le total des teneurs en les divers constituants vaut 100 %) :
| | | |
|---|---|---|
| a) | polymère de base | 30 - 100 |
| b) | polymères thermoplastiques | 0 - 50 |
| c) | caoutchoucs naturels et synthétiques | 0 - 50 |
| d) | adjuvants de pégosité | 0 - 30 |
| e) | plastifiants | 0 - 50 |
| f) | promoteurs d'adhésion | 0 - 5 |
| g) | stabilisants | 0 - 5 |
| h) | charges renforçantes et non-renforçantes | 0 - 70 |
le polymère de base étant constitué d'un homopolymère, copolymère ou terpolymère d'isobutylène ou d'un mélange de tels polymères, ou bien d'un homopolymère et/ou d'un copolymère d'acrylates et/ou méthacrylates ou d'un mélange de tels polymères.

13. Emploi conforme à la revendication 12, **caractérisé en ce que** le matériau du joint étanche de bordure contient les constituants suivants (les teneurs sont exprimées en pourcentages pondéraux, et le total des teneurs en les divers constituants vaut 100 %) :
| | | |
|---|---|---|
| a) | polymère de base | 40 - 100 |
| b) | polymères thermoplastiques | 0 - 30 |
| c) | caoutchoucs naturels et synthétiques | 0 - 30 |
| d) | adjuvants de pégosité | 0 - 25 |
| e) | plastifiants | 0 - 30 |
| f) | promoteurs d'adhésion | 0 - 3 |
| g) | stabilisants | 0 - 3 |
| h) | charges renforçantes et non-renforçantes | 0 - 60 |

14. Emploi conforme à l'une des revendications 11 à 13, **caractérisé en ce que** le seuil d'écoulement du joint étanche de bordure (mesuré à l'aide d'un rhéomètre à géométrie plan-plan, muni de disques de mesure de 25 cm de diamètre, et en mode oscillatoire à une fréquence d'oscillations de 1 Hz, pour un couple de rotation de 0,1 à 100 mN.m et une vitesse de cisaillement de 10⁻⁴ à 1 s⁻¹) vaut au maximum 4 000 Pa à 120 °C.

15. Emploi conforme à la revendication 14, **caractérisé en ce que** le seuil d'écoulement du joint étanche de bordure vaut au maximum 2 000 Pa à 120 °C.

16. Emploi conforme à l'une des revendications 9 à 15, **caractérisé en ce que** la fabrication du dispositif sandwich comporte les étapes de procédé suivantes :
1. nettoyage et séchage de l'écran et du panneau de verre
2. dépôt d'un joint étanche de bordure sur la face avant de l'écran ou sur le panneau de verre
3. mise du panneau de verre en exact recouvrement sur la face avant de l'écran
4. pressage de l'objet composite obtenu, formé de l'écran et du panneau de verre, pour établir la distance voulue entre l'écran et le panneau de verre
5. remplissage de l'espace intérieur avec la résine de coulée
6. évacuation de l'air présent dans l'espace intérieur et fermeture de l'orifice de remplissage
7. vérification de l'absence de bulles d'air dans l'espace intérieur rempli de résine de coulée
8. durcissement de la résine de coulée par irradiation avec un rayonnement ultra-violet
9. vérification finale du dispositif sandwich fini.
